# FASCICULE DE BREVET EUROPEEN

(11) **EP 0 470 022 B1**
(45) Date de publication et mention de la délivrance du brevet: **14.12.1994**
(21) Numéro de dépôt: 91420285.8
(22) Date de dépôt: 31.07.1991
(51) Int. Cl.: B22F 7/08

(54) **Procédé et dispositif de revêtement d'une pièce comportant une surface inclinée à revêtir de poudre en couche mince**
Verfahren und Vorrichtung zum Beschichten eines Werkstücks, welches eine geneigte Fläche hat, mit einer Dünnpulverschicht
Process and apparatus for coating a component having an inclined face with a thin layer of powder

(30) Priorité: 02.08.1990 FR 9010488
(43) Date de publication de la demande: 05.02.1992
(73) Titulaire: SINTERTECH, F-92400 Courbevoie (FR)
(72) Inventeur: Brunel, Gérard, F-95430 Auvers sur Oise (FR); Gueydan, Henri, F-38340 Moirans (FR); Youssef, Hassan, F-95150 Taverny (FR)
(74) Mandataire: Jacquet, Michel

(56) Documents cités:
- EP-A- 0 266 717
- FR-A- 897 005
- US-A- 4 657 734

## Description

La présente invention concerne le revêtement de surfaces inclinées par des poudres, par exemple pour réaliser des couches de friction sur des bagues ou anneaux de friction pour embrayages ou freins, bagues ou anneaux Synchro. On réalise selon l'invention l'application et la compression "in situ" d'une telle couche, avant son frittage. Ce genre de procédé est décrit par exemple dans EP-A-0266717.

Le document **DE-C-3417813C1** décrit dans son préambule plusieurs revêtements de friction en poudre, en particulier d'après le **DE-PS-1251104** un corps de friction ayant deux couches de friction déposées et frittées sur une sous-couche en tôle.

La demanderesse a cherché à mettre au point un moyen commode et économique de réaliser de telles couches de friction avant leur frittage, particulièrement dans le cas de bagues ou anneaux Synchro dont les surfaces de friction sont tronconiques.

### EXPOSE DE L'INVENTION

L'invention a pour objet un procédé de revêtement d'une première pièce comportant une surface inclinée à revêtir de poudre, selon lequel:
a) on dispose une surface verticale inférieure sous la surface inclinée de ladite pièce à revêtir, ladite surface verticale succédant à ladite surface inclinée et faisant partie soit de la première pièce, soit d'une autre pièce,
b) on forme au moyen d'une deuxième pièce un intervalle à extrémité inférieure fermée compris entre ladite surface inclinée, ladite surface verticale inférieure et ladite deuxième pièce, l'extrémité supérieure du dit intervalle étant ouverte;
c) on remplit de poudre ledit intervalle par ladite extrémité supérieure ouverte;
d) on ferme ladite extrémité supérieure;
e) et on déplace verticalement soit la première pièce et s'il y a lieu ladite pièce à surface verticale inférieure, soit la deuxième pièce de façon à réduire le volume du dit intervalle, ladite poudre étant alors comprimée contre ladite surface inclinée.

Si la première pièce ne comporte pas de surface vertciale inférieure servant de moyen de guidage dans le présent procédé, on lui associe de façon rigide une pièce comportant une surface d'appui vertical succédant au bas de sa surface inclinée avec ou sans décrochement, permettant le glissement vertical de la seconde pièce contre cette surface d'appui. L'expression précédente "s'il y a lieu" signifie "s'il n'y a pas une telle surface verticale inférieure sur la première pièce".

Ladite surface inclinée à revêtir de poudre fait généralement un angle de 3° à 30°, plus typiquement de 4 à 15°, avec la direction verticale, qui est celle de l'axe de révolution dans le cas d'une bague ou anneau Synchro à surface de friction tronconique. Le revêtement de poudre comprimée obtenu a typiquement 0,3 à 5 mm d'épaisseur.

Dans l'invention, on réalise une sorte de tiroir incliné sur la surface à revêtir, et on en déplace verticalement une grande face, ce qui produit une forte réduction de son volume intérieur, par réduction de son épaisseur et aussi par raccourcissement, d'où une compression de la poudre contenue, directement sur la surface à revêtir.

Il est possible de réaliser ainsi le dépôt et la compression de 2 ou 3 couches successives de nature et/ou de granulométrie différente. Lorsque la surface à revêtir a des bords latéraux libres, l'intervalle de remplissage de poudre et de compression doit être fermé latéralement par des moyens glissant chacun par rapport à une des deux faces du "tiroir", c'est-à-dire par rapport à la surface inclinée à revêtir ou par rapport à la surface en regard de la deuxième pièce. Le plus typiquement, la surface à revêtir est annulaire et souvent tronconique, de sorte qu'on n'a pas besoin de telles fermetures latérales.

Un avantage important du procédé est la possibilité de régler le taux de compression de la poudre. On peut réaliser un taux de compression constant sur toute la hauteur variable en modifiant au moins localement la distance de la surface en regard de la deuxième pièce par rapport à ladite surface à revêtir. Ainsi, dans une bague Synchro on pourra s'adapter à un problème de lubrification variable selon une différence de vitesse, en réalisant par exemple une largeur initiale plus forte donc une compression plus faible, et en employant éventuellement une granulométrie de poudre différente, à la partie supérieure du "tiroir incliné". On peut obtenir une modification continue de la compression entre le bas et le haut de la surface inclinée en inclinant la surface intérieure de la deuxième pièce, ou surface regardant la surface inclinée, par rapport à cette surface inclinée.

La surface inclinée à revêtir, habituellement métallique, est préparée préalablement pour l'accrochage de la couche de poudre ainsi répartie et comprimée, par décapage et sablage, ou par réalisation de stries ou reliefs, ou encore de trous permettant un ancrage de la couche de poudre. La pièce pourvue du revêtement de poudre comprimée est ensuite soumise à un traitement thermique de frittage, et de façon à obtenir un très bon accrochage de la couche de poudre comprimée et frittée, on préfère faire comme préparation préalable pour l'accrochage un revêtement d'une suspension de soudobrasure qu'on oxyde puis qu'on réduit, typiquement de la façon suivante :
- on dégraisse et/ou on sable la surface à revêtir, et on la revêt d'une suspension (11) de poudre de soudobrasure dans un liquide organique;
- on élimine toute trace de carbone de ce revêtement, par oxydation à chaud du dit revêtement, typiquement entre 300 et 550°C;
- on réduit les oxydes alors formés en traitant thermiquement la pièce ainsi revêtue en atmosphère réductrice, typiquement entre 600° et 1000°C ce qui donne une excellente adhérence des poudres comprimées sur la surface ainsi traitée et, après frittage, une très bonne liaison du revêtement.

L'invention a aussi pour objet le dispositif permettant de revêtir la surface inclinée d'une première pièce selon le procédé décrit plus haut. Ce dispositif comprend au moins :
A) ladite première pièce avec sa surface inclinée à revêtir ainsi qu'une surface verticale inférieure lui succédant, faisant partie de la première pièce ou d'une autre pièce,
B) une deuxième pièce comprimante, ou seconde pièce, ayant une surface inclinée regardant ladite surface à revêtir, et une surface verticale inférieure pouvant glisser par rapport à la surface verticale inférieure associée à la première pièce;
C) un moyen de fermeture du bas de l'intervalle compris entre lesdites surfaces inclinées des première et deuxième pièces;
D) un moyen de fermeture du haut de cet intervalle, à mettre en place après le remplissage du dit intervalle par de la poudre;
   l'une des deux dites surfaces inclinées pouvant être déplacée verticalement en même temps qu'un des dits moyens de fermeture, de façon à réduire le volume du dit intervalle et à comprimer ainsi la poudre qui y est contenue.

Les principales particularités du procédé et du dispositif seront décrites dans les exemples et font l'objet des revendications 2 à 7 et 9,10.

### Exemples

La figure 1 représente une pièce de friction à alésage conique en cours de revêtement de poudre, en demi-coupe axiale, les outillages étant seuls coupés.

La figure 2 représente une deuxième pièce de friction, dont la surface tronconique extérieure est à revêtir de poudre, en coupe axiale des outillages.

La figure 3 représente un anneau de friction Synchro, dont les deux surfaces tronconiques sont à revêtir de poudre, en coupe axiale des outillages.

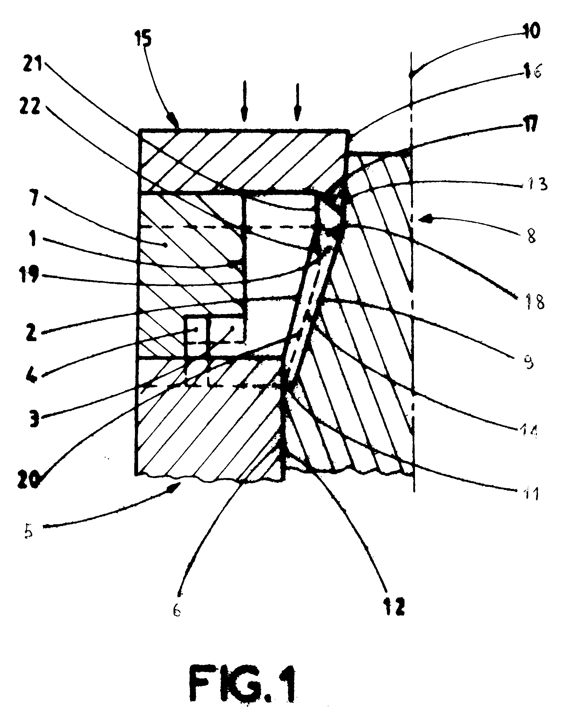

### 1) Premier exemple (Fig.1)

La pièce 1 en acier présente une surface inclinée tronconique 2 surmontée d'une surface verticale 21, ces surfaces 2 et 21 devant recevoir une couche de friction, et une base 3 de plus fort diamètre portant des dents 4. La surface à revêtir 2 et 21 a reçu une préparation de surface d'accrochage à la soudo-brasure comme décrit plus haut. La surface 2 est inclinée de 8° sur l'axe de révolution 10, la surface 21 à peu près verticale servira de support à la portion supérieure épaissie du revêtement réalisé 19.

La pièce 1 repose sur un poinçon annulaire inférieure 5, qui a une surface verticale inférieure 6 succédant à la surface tronconique 2. La pièce 1 est centrée et guidée par un outillage extérieur annulaire 7. La seconde pièce 8 est une broche centrale 8 ayant une surface tronconique 9 un peu plus inclinée sur l'axe 10 que la surface 2 et, après un décrochement 11, une surface verticale inférieure 12 pouvant glisser à l'intérieur de la surface verticale inférieure 6.

La broche 8 comporte aussi au-dessus de sa surface tronconique 9 une surface verticale cylindrique 13.

Les outillages 5 et 8 sont ainsi en place, ils définissent avec la surface à revêtir 2 et 21, au moyen de leurs surfaces utiles 6, 11, 9 et 13, un intervalle annulaire ou chambre à poudre 14, qui a été remplie de poudre par son extrémité ouverte annulaire comprise entre la surface verticale 13 de la broche 8 et la portée 21 de la pièce 1.

On a ensuite fermé l'extrémité ouverte (21, 13) par une pièce supérieure rigide 15, coulissant axialement par son bord intérieur 16 autour de la surface verticale cylindrique 13 de la broche 8. La portion 17 de fermeture de l'intervalle ou interstice 14 est en oblique pour créer un chanfrein 18 à l'extrémité supérieure de la couche de poudre comprimée 19. On a fait descendre la pièce supérieure 15, entraînant vers le bas les pièces 1 et 7 ainsi que 5, la broche 8 restant fixe, et on a arrêté juste avant que le bord 16 ne bute contre l'extrémité haute de la surface tronconique 9 de la broche 8. Les positions de la pièce 1 et des outillages 15 et 7 sont indiquées en trait interrompu sur la figure 1, 20 et 22 désignant les nouvelles positions des surfaces 2 et 21. On voit que la section droite du nouvel intervalle "18, 22, 20, 11, 9" est plus de deux fois plus faible que celle de l'intervalle initial 14, ce qui traduit le taux de compression de la poudre de friction sur la surface 20 et 21 traitée de façon à assurer un très bon accrochage.

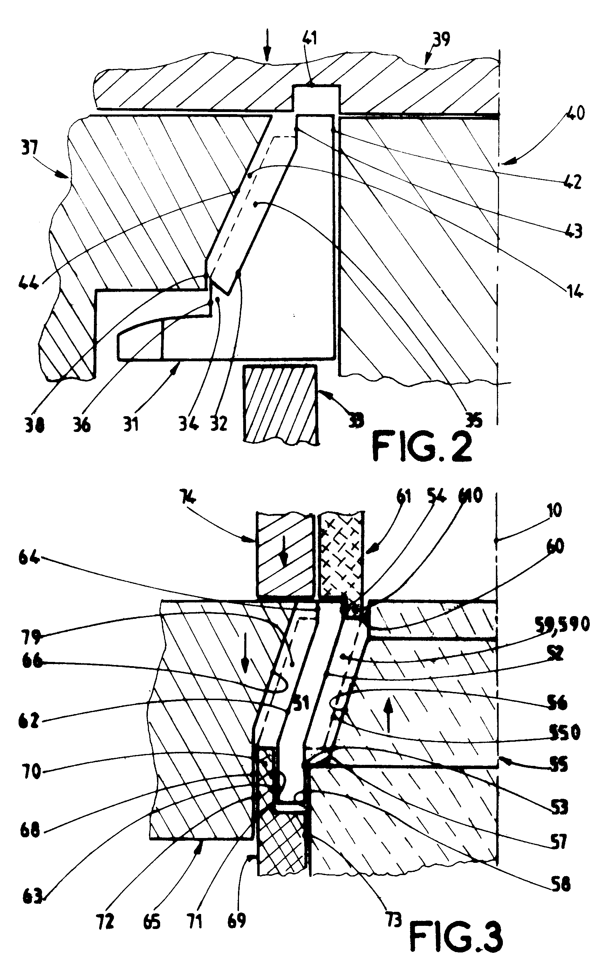

### 2) Deuxième exemple (Fig.2)

La pièce 31 en acier présente une surface tronconique inclinée extérieure 32 devant recevoir une couche de friction. La préparation de surface est la même que précédemment. La pièce 31 repose sur un support annulaire 33 sans rôle particulier pour ce revêtement. La pièce 31 comporte un relief 34 servant à retenir la future couche de poudre 35 et ayant une surface extérieure verticale de guidage et de fermeture 36. La deuxième pièce 37 ou pièce de compression est annulaire extérieure à la pièce 31, elle comporte une surface intérieure verticale 38 pouvant coulisser autour de la surface de guidage 36 ainsi qu'une surface 44 regardant la surface à revêtir 32, à 10° par rapport à l'axe comme cette surface 32.

La position de remplissage de l'intervalle initial 14 est celle des pièces 31 et 37 sur la figure 2.

La fermeture de l'extrémité supérieure de cet intervalle 14 est faite au moyen d'une pièce supérieure 39 qui s'appuie, à l'intérieur de la pièce 31, sur une "fausse broche" 40 permettant de mieux assurer la descente axiale, les diamètres étant ici importants.

Pour compléter le guidage de cette descente, la pièce 39 comporte une gorge annulaire 41 s'encastrant et glissant autour de l'extrémité supérieure à surfaces verticales 42 et 43 de la pièce 31.

Pour la compression, la pièce supérieure 39 ainsi guidée entraîne vers le bas la deuxième pièce 37. La position de l'intervalle obtenu est représentée en trait interrompu sur la figure, cet intervalle 35 aminci et raccourci est de volume environ 1,7 fois plus faible que l'intervalle initial.

### 3) Troisième exemple (Fig.3)

Cet exemple concerne la fabrication d'un anneau Synchro double face. La pièce de départ 51 est un anneau 51 en tôle d'acier conformée, comportant deux faces tronconiques inclinées 52 et 62 comprises chacune entre deux portions d'extrémité verticales respectivement inférieure et supérieure, 53 et 54 et 63 et 64. Les deux grandes faces intérieure 53 et 52 et 54 et extérieure 63 et 62 et 64 sont traitées préalablement par dégraissage et revêtement d'une suspension de poudre de soudobrasure pour le bon accrochage des revêtements, crus après compression puis frittés.

La pièce comprimante de la face intérieure inclinée 52 est une broche centrale 55 de surface tronconique 56 inclinée à 12° sur l'axe de révolution 10, ayant à sa base une épaule 57 servant à fermer l'intervalle de remplissage de poudre 59 puis une surface verticale de guidage 58. La broche étagée 55 comporte une surface cylindrique verticale supérieure 60 qui coulissera le long d'une pièce de fermeture supérieure 61 de l'intervalle 59, s'appuyant sur l'extrémité supérieure de l'anneau 51.

La pièce comprimante 65 de la face extérieure 62 est annulaire extérieure avec une surface tronconique intérieure inclinée 66 et en-dessous une surface verticale de guidage 68. Son guidage est assuré par une pièce annulaire 69 dont la portion d'extrémité 70 a une surface verticale intérieure 71 s'appuyant contre la portion inférieure 63 de la face extérieure de l'anneau à revêtir 51, et une surface verticale extérieure 72 servant au guidage de la surface verticale 68 de la pièce 65. On remarque que la pièce 69 a une autre surface verticale intérieure 73 complétant le guidage de la broche 55. Sur cette face extérieure de l'anneau 51, le dispositif est complété par une pièce annulaire de fermeture 74 qui s'appuie sur le dessus de la pièce comprimante 65 et fermera l'extrémité supérieure ouverte 64, 66 de l'intervalle annulaire de remplissage de poudre 79.

Du côté intérieur de l'anneau 51, une fois l'intervalle 59 rempli par la poudre de friction et la fermeture 61 mise en place, sa portion inférieure 610 s'insérant entre les surfaces verticales 54 et 60 de l'anneau et de la broche, la compression est obtenue par soulèvement axial (flèche) de la broche 55. Le bord de l'épaule 57 et l'extrémité supérieure de la surface tronconique 56 viennent respectivement en butée contre le bas de la face inclinée 52 de l'anneau 51 et contre l'extrémité inférieure de la fermeture 610, le profil utile de la broche 55 étant représenté par une ligne discontinue 550 et délimitant avec les faces 52 et 53 de l'anneau 61 un nouvel intervalle et une section annulaire 590 de poudre comprimée de volume réduit à environ 65% du volume initial.

Du côté extérieur de l'anneau 51, la compression est effectuée par déplacement axial vers le bas (flèches) de la pièce de fermeture 74 et de la pièce annulaire comprimante 65. La position d'arrêt est définie à 0,5 mm de la butée de la matrice 65 sur l'extrémité supérieure de la portion 70 de la pièce de guidage fixe 69, et de la pièce 74 sur le début de la face inclinée 62 de l'anneau 51. Le profil des pièces 65 et 74 à l'arrêt est représenté en trait discontinu 650, il délimite la section annulaire de poudre comprimée 790 qui est obtenue.

On recommande d'effectuer ces deux compressions intérieures et extérieures simultanément, de façon à équilibrer les contraintes sur l'anneau de friction, ce qui est favorable à la fois à la bonne définition géométrique de l'anneau de friction double face et à la bonne tenue dans le temps de ses couches de friction.

### Observations et avantages

Les exemples montrent la souplesse du procédé.
- L'importance de la compression est réglée de façon simple, en particulier par rapport à un changement d'inclinaison de la face sur laquelle un outillage ou la pièce elle-même glisse.
- Le choix de la pièce à déplacer pour opérer la compression, pièce elle-même ou pièce dite comprimante, peut en général être inversé. Les choix préférés, ceux des exemples, proviennent d'une recherche d'amélioration du guidage.
- La possibilité de réaliser des taux de compression variables progressivement ou localement a déjà été signalée, ainsi que la possibilité de réaliser des couches comprimées superposées sur une surface inclinée à revêtir.

### Applications Industrielles

L'invention est utilisée en particulier pour la réalisation de pièces de friction, par exemple des bagues ou anneaux de friction ou "Synchro". Elle permet d'y faire varier la qualité des couches de friction, d'améliorer l'accrochage des ces couches, et de les obtenir de façon plus simple et reproductible.

## Revendications

1. Procedé de revêtement d'une première pièce (1; 31; 51) comportant une surface inclinée (2; 32; 52; 62) à revêtir de poudre, selon lequel :
a) on dispose une surface verticale inférieure (6; 36; 53; 63) sous la surface inclinée de ladite pièce à revêtir, ladite surface verticale (6; 36; 53; 63) succédant à ladite surface inclinée (2; 32; 52; 62) et faisant partie de la première pièce (1) ou d'une autre pièce (5),
b) on forme au moyen d'une deuxième pièce (8; 37; 55; 65) un intervalle (14; 59; 79) à extrémité inférieure fermée compris entre ladite surface inclinée (2; 32; 52; 62), ladite surface verticale inférieure (6; 36; 53; 63) et ladite deuxième pièce (8; 37; 55; 65), l'extrémité supérieure (21, 13; 64, 66) du dit intervalle (14; 59; 79) étant ouverte;
c) on remplit de poudre ledit intervalle (14; 59; 79) par ladite extrémité supérieure ouverte (21, 13; 64, 66);
d) on ferme ladite extrémité supérieure;
e) et on déplace verticalement soit la première pièce (1) et s'il y a lieu ladite pièce à surface verticale inférieure (6), soit la deuxième pièce (37; 55; 65), de façon à réduire le volume du dit intervalle, ladite poudre étant alors comprimée contre ladite surface inclinée (2; 32; 52; 62).

2. Procedé selon la revendication 1, dans lequel on déplace verticalement la première (1; 31; 51) ou la deuxième pièce (8; 37; 55; 65) l'une par rapport à l'autre en faisant glisser ladite surface verticale inférieure (6; 36; 53; 63) succédant à ladite surface inclinée à revêtir (2; 32; 52; 62) et une surface verticale inférieure (12; 38; 58; 68) de la deuxième pièce l'une par rapport à l'autre.

3. Procédé selon la revendication 2, dans lequel on fait glisser en même temps le moyen de fermeture (15; 39; 74) de l'extrémité supérieure de l'intervalle par rapport à une surface verticale supérieure (13; 42, 43; 610; 64) de la première ou de la deuxième pièce.

4. Procédé selon l'une quelconque des revendications 1 à 3, dans lequel ladite surface (2; 32; 52; 62) à revêtir de poudre est inclinée de 3° à 30° par rapport à l'axe vertical (10).

5. Procédé selon l'une quelconque des revendications 1 à 3, dans lequel on réalise ainsi 2 ou 3 couches de poudres comprimées de nature et/ou de granulométrie différentes.

6. Procédé selon l'une quelconque des revendications 1 à 3, dans lequel on fait varier le taux de compression de la poudre sur la hauteur de la surface à revêtir (2) en faisant varier la distance de la deuxième pièce par rapport à ladite surface.

7. Procédé selon l'une quelconque des revendications 1 à 3, dans le cas où la première pièce (1; 31; 51) est métallique, et dans lequel on prépare préalablement sa surface à revêtir en la dégraissant, en la revêtant d'une suspension de poudre de soudobrasure, en l'oxydant entre 300° et 550° puis en la traitant en atmosphère réductrice entre 600° et 1000°C.

8. Dispositif de revêtement d'une première pièce comportant une surface inclinée (2; 32; 52; 62) à revêtir de poudre, comprenant au moins :
A) ladite première pièce avec sa surface inclinée à revêtir ainsi qu'une surface verticale inférieure (6; 36; 53; 63) lui succédant portée soit par la première pièce, soit par une pièce (5),
B) une deuxième pièce comprimante (8; 37; 55; 65) ayant une surface inclinée (9; 44; 56; 66) regardant ladite surface inclinée à revêtir, et une surface verticale inférieure (12; 38; 58; 68) pouvant glisser par rapport à la surface verticale inférieure (6; 36; 53; 63) succédant à ladite surface inclinée à revêtir (2; 32; 52; 62);
C) un moyen de fermeture (11; 34; 57; 70) du bas de l'intervalle (14; 59; 79) compris entre lesdites surfaces inclinées des première et deuxième pièces;
D) un moyen de fermeture du haut de cet intervalle, (15; 39; 61; 74) à mettre en place après le remplissage du dit intervalle (14; 59; 79) par de la poudre;
l'une des deux dites surfaces inclinées pouvant être déplacée verticalement en même temps qu'un desdits moyens de fermeture (15; 39; 57; 74) de façon à réduire le volume du dit intervalle (14; 59; 79) et à comprimer ainsi la poudre qui y est contenue.

9. Dispositif selon la revendication 8, dans lequel ledit moyen de fermeture (15; 39; 74) du haut du dit intervalle (14; 79) glisse par rapport à une surface verticale supérieure (13, 43, 64) de la pièce à revêtir (31; 51) ou de la pièce comprimante (8).

10. Dispositif selon la revendication 9, pour le revêtement d'une pièce annulaire (51) comportant des surfaces intérieure (52) et extérieure (62) à revêtir et respectivement une pièce comprimante intérieure (55) mobile axialement et une pièce comprimante annulaire extérieure (65) mobile axialement en sans inverse.

## Claims

1. A method of coating a first member (1; 31; 51) comprising an inclined surface (2; 32; 52; 62) to be coated with powder, according to which :
a) a lower vertical surface (6; 36; 53; 63) is, arranged below the inclined surface of said member to be coated said vertical surface (6; 36; 53; 63) continuing said inclined surface (2; 32; 52; 62) and being a part of the first member (1) or of another member (5),
b) a gap (14; 59; 79) with its lower end closed is formed by means of a second member (8; 37; 55; 65), the closed end being located between said inclined surface (2; 32; 52; 62), said lower vertical surface (6; 36; 53; 63) and said second member (8; 37; 55; 65), the upper end (21, 13; 64, 66) of said gap (14; 59; 79) being open;
c) said gap (14; 59; 79) is filled with powder through said upper open end (21, 13; 64, 66);
d) said upper end is closed;
e) and either the first member (1) and, if appropriate, said member with a lower vertical surface (6), or the second member (37; 55; 65) are displaced vertically so as to reduce the volume of said gap, the powder then being compressed against said inclined surface (2; 32; 52; 62).

2. The method of Claim 1, wherein the first member (1; 31; 51) or the second usher (8; 37; 55; 65) are displaced relative to one another, by sliding said lower vertical surface (6; 36; 53; 63) continuing said inclined surface to be coated (2; 32; 52; 62) and a lower vertical surface (12; 38; 58; 68) of the second member over one another.

3. The method of Claim 2, wherein the means (15; 39; 74) for closing the upper end of the gap is simultaneously slid over an upper vertical surface (13; 42. 43; 610; 64) of the first or second member.

4. The method of any of Claims 1 to 3, wherein said member (2; 32; 52; 62) to be coated with powder is inclined at 3 to 30°C to the vertical axis (10).

5. The method of any of Claims 1 to 3, wherein two or three layers of compressed powders of different types and/or with a different particle size distribution are thus formed.

6. The method of any of Claims 1 to 3, wherein the amount of compression applied to the powder over the area of the surface (2) to be coated is varied, by varying the distance between the second member and said surface.

7. The method of any of Claims 1 to 3, in cases where the first member (1; 31; 51) is metallic, wherein the surface thereof to be coated is previously prepared by degreasing it, covering it with a suspension of braze welding powder, oxidising it at from 300 to 550° then treating it in a reducing atmosphere at from 600 to 1000°C.

8. Apparatus for coating a first member with an inclined surface (2; 32; 52; 62) to be coated with powder, comprising at least:
A) said first member with its inclined surface to be coated as also a lower vertical surface (6; 36; 53; 63) continuing therefrom; and being supported whether by the first member either by a member (5),
B) a second compressing member (8; 37; 55; 65) with an inclined surface (9; 44; 56; 66) facing said inclined surface to be coated, and a lower vertical surface (12; 38; 58; 68) which can slide over the lower vertical surface (6; 36; 53; 63) continuing said inclined surface to be coated (2; 32; 52; 62);
C) a means (11; 34; 57; 70) for closing the bottom of the gap (14; 55; 79) between said inclined surfaces of the first and second members;
D) a means (15; 39; 61; 74) for closing the top of that gap, to be put into position when said gap (14; 59; 79) has been filled with powder;
one of said two inclined surfaces being adapted to be displaced vertically simultaneously with one of said closing means (15; 39; 57; 74), so as to reduce the volume of said gap (14; 59; 79) and thus compress the powder contained therein.

9. The apparatus of Claim 8, wherein said means (15; 39; 74) for closing the top of said gap (14; 79) slides over an upper vertical surface (13, 43, 64) of the member to be coated (31; 51) or of the compressing member (8).

10. The apparatus of Claim 9, for coating an annular member (51) comprising an inner surface (52) and an outer surface (62) to be coated and, respectively, an inner compressing member (55) which is axially movable and an outer annular compressing member (65) which is axially movable in the reverse direction.

## Patentansprüche

1. Verfahren zum Beschichten eines ersten Werkstücks (1; 31; 51) mit einer geneigten Fläche (2; 32; 52; 62), die mit Pulver zu beschichten ist, bei dem
a) eine untere senkrechte Fläche (6; 36; 53; 63) unter der geneigten Fläche des genannten zu beschichtenden Werkstücks angeordnet wird, wobei die genannte senkrechte Fläche ein Teil des ersten Werkstücks (1) oder eines weiteren Werkstücks (5) ist;
b) mittels eines zweiten Werkstücks (8; 37; 55; 65) ein Zwischenraum (14; 59; 79) mit geschlossenem unteren Ende zwischen der genannten geneigten Fläche (2; 32; 52; 62), der genannten unteren senkrechten Fläche (6; 36; 53; 63) und dem genannten zweiten Werkstück (8; 37; 55; 65) gebildet wird, wobei das obere Ende (21, 13; 64, 66) des genannten Zwischenraums (14; 59; 79) offen ist;
c) der genannte Zwischenraum (14; 59; 79) durch das genannte offene obere Ende (21, 13; 64, 66) mit Pulver gefüllt wird;
d) das genannte obere Ende geschlossen wird;
e) und entweder das erste Werkstück (1) und ggf. das genannte Werkstück mit unterer senkrechter Flüche (6), oder das zweite Werkstück (37; 55; 65) in der Senkrechten dergestalt verschoben wird, daß das Volumen des genannten Zwischenraums verringert wird, wobei das genannte Pulver dann gegen die geneigte Fläche (2; 32; 52; 62) gepreßt wird.

2. Verfahren nach Anspruch 1, bei dem das erste (1; 31; 51) oder das zweite Werkstück (8; 37; 55; 65) senkrecht gegenüber dem anderen verschoben wird, indem die genannte untere senkrechte Fläche (6; 36; 53; 63), die sich an die genannte zu beschichtende geneigte Fläche (2; 32; 52; 62) anschließt, und eine untere senkrechte Fläche (12; 38; 58; 68) des zweiten Werkstücks gegeneinander verschoben werden.

3. Verfahren nach Anspruch 2, bei dem gleichzeitig das Schließmittel (15; 39; 74) des oberen Endes des Zwischenraums gegenüber einer oberen senkrechten Flache (13; 42, 43; 610; 64) des ersten oder des zweiten Werkstücks verschoben wird.

4. Verfahren nach einem der Ansprüche 1 bis 3, bei dem die genannte mit Pulver zu beschichtende Fläche (2; 32; 52; 62) um 3° bis 30° gegenüber der senkrechten Achse (10) geneigt ist.

5. Verfahren nach einem der Ansprüche 1 bis 3, bei dem auf diese Weise 2 oder 3 Schichten zusammengepreßten Pulvers von natürlicher Beschaffenheit und/oder mit unterschiedlichen Korngrößen hergestellt werden.

6. Verfahren nach einem der Ansprüche 1 bis 3, bei dem der Kompressionsgrad des Pulvers über die Höhe der zu beschichtenden Fläche (2) verändert wird, indem der Abstand des zweiten Werkstücks gegenüber der genannten Fläche verändert wird.

7. Verfahren nach einem der Ansprüche 1 bis 3 für den Fall, in dem das erste Werkstück (1; 31; 51) aus Metall besteht und in dem dessen zu beschichtende Fläche zuvor vorbereitet wird, indem sie entfettet, mit einer Schweißlötpulver-Suspension überzogen, zwischen 300° und 550° oxidiert und schließlich in einer Reduktionsatmosphäre zwischen 600° und 1000°C behandelt wird.

8. Vorrichtung zum Beschichten eines ersten Werkstücks mit einer geneigten Fläche (2; 32; 52; 62), die mit Pulver zu beschichten ist, mindestens bestehend aus:
A) dem genannten ersten Werkstück mit seiner zu beschichtenden, geneigten Fläche sowie einer unteren senkrechten Fläche (6; 36; 53; 63), die sich an diese anschließt und entweder von dem ersten Werkstück oder von einem Werkstück (5) gehalten wird,
B) einem zweiten, komprimierenden Werkstück (8; 37; 55; 65) mit einer geneigten Fläche (9; 44; 56; 66) gegenüber der genannten zu beschichtenden, geneigten Fläche, und einer unteren senkrechten Fläche (12; 38; 58; 68), die gegenüber der unteren senkrechten Fläche (6; 36; 53; 63), die sich an die genannte zu beschichtende geneigte Fläche (2; 32; 52; 62) anschließt, verschoben werden kann,
C) einem Schließmittel (15; 39; 74) des unteren Teils des Zwischenraums (14; 59; 79) zwischen den genannten geneigten Flächen des ersten und des zweiten Werkstücks,
D) einem Schließmittel des oberen Teils dieses Zwischenraums (15; 39; 61; 74), das nach dem Füllen des genannten Zwischenraums (14; 59; 79) mit Pulver angebracht wird; wobei eine der genannten geneigten Flächen senkrecht gleichzeitig mit einem der genannten Schließmittel (15; 39; 57; 74) verschoben werden kann, so daß das Volumen des genannten Zwischenraums (14; 59; 79) verringert wird und dadurch das darin enthaltene Pulver zusammengepreßt wird.

9. Vorrichtung nach Anspruch 8, wobei das genannte Schließmittel (15; 39; 74) des oberen Teils des genannten Zwischenraums (14; 79) gegenüber einer oberen senkrechten Fläche (13; 43; 64) des zu beschichtenden Werkstücks (31; 51) oder des komprimierenden Werkstücks (8) gleitet.

10. Vorrichtung nach Anspruch 9 zum Beschichten eines ringförmigen Werkstücks (51) mit einer zu beschichtenden Innenfläche (52) und Außenfläche (62) und einem inneren Druckwerkstück (55), das in Achsrichtung beweglich ist, bzw. einem äußeren, ringförmigen Druckwerkstück (65), das in entgegengesetzter Richtung in Achsrichtung beweglich ist.
